(19) Europäisches Patentamt
European Patent Office
Office européen des brevets

(11) Veröffentlichungsnummer : **0 156 990**
**B1**

(12) # EUROPÄISCHE PATENTSCHRIFT

(45) Veröffentlichungstag der Patentschrift : **29.07.87**

(51) Int. Cl.[4] : **C 08 G 81/02**

(21) Anmeldenummer : **84115707.6**

(22) Anmeldetag : **18.12.84**

(54) **Pfropfpolymere von Polyphenylenether mit hydroxylgruppenhaltigen vinylaromatischen Polymeren, deren Herstellung und Verwendung.**

(30) Priorität : **27.01.84 DE 3402791**

(43) Veröffentlichungstag der Anmeldung : **09.10.85 Patentblatt 85/41**

(45) Bekanntmachung des Hinweises auf die Patenterteilung : **29.07.87 Patentblatt 87/31**

(84) Benannte Vertragsstaaten : **BE DE FR GB IT NL**

(56) Entgegenhaltungen :
**EP-A- 0 017 751**
**EP-A- 0 048 391**
**DE-A- 1 795 353**
**FR-A- 2 449 701**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Taubitz, Christof, Dr.**
**In der Dreispitz 15**
**6706 Wachenheim (DE)**
Erfinder : **Hambrecht, Juergen, Dr.**
**Werderstrasse 30**
**6900 Heidelberg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft Pfropfhomo- und Pfropfcopolymere von Polyphenylenethern mit hydroxylgruppenhaltigen vinylaromatischen Homo- oder Copolymeren sowie deren Herstellung und deren Verwendung zur Herstellung von Polymermischungen.

Bei derartigen Pfropfpolymeren handelt es sich um polymere Stoffe, bei denen an bereits vorgebildeten Homo- oder Copolymeren nachträglich Seitenketten aus einem anderen Polymeren aufgepfropft sind. Im Gegensatz zu den Blockcopolymeren sind bei den Pfropfpolymeren die Polymeren der Seitenkette nicht an beiden Enden mit dem Stammpolymeren der Hauptkette verknüpft sondern nur an einem Kettenende. Die Herstellung von Pfropfpolymeren bieten Möglichkeiten zur Verbesserung des Eigenschaftsbildes von Polymeren ohne Änderung der Monomerzusammensetzung.

Bei bekannten Pfropfpolymeren aus Polyphenylenethern und Polystyrolen wird auf vorgelegtes Phenylenetherpolymer Styrolhomo- oder -copolymerisat aufgefropft, so daß Styrolpolymerisat in den Seitenketten entsteht (vgl. EP-AI-17 751, US-A-4 338 410 und Chemical Abstracts *96* (1982) 69647 (JP-AI-80/53 968)). Der Polyphenylenether enthält wegen seiner breiten Molekulargewichtsverteilung große niedermolekulare Anteile, so daß ein erheblicher Teil des erhaltenen Pfropfpolymerisats wenig Polyphenylenether enthält, was für die mechanischen Eigenschaften von Nachteil ist.

Es ist auch bereits bekannt, Blockcopolymere aus Polyphenylenether und Styrolhomo- oder -copolymeren herzustellen, die zu Formteilen verarbeitet werden können (vgl. US-Patentschriften 4 221 881, 4 238 584 und 4 226 951). Bei diesen bekannten Verfahren werden polyfunktionelle Polystyrole mit Polyphenylenetherderivaten mehrfach gekoppelt. Die bekannten Produkte weisen den Nachteil auf, daß ihre Herstellung aufwendig und technisch umständlich ist.

In der Literatur sind auch bereits Pfropfpolymerisate beschrieben, bei denen Polyphenylenether auf Styrolcopolymere mit Maleinsäureanhydrid, Alkencarbonsäurechlorid, -carbonsäureester oder -carbonsäuren oder Glycidylmethacrylat aufgepfropft sind (vgl. EP-A2-48 391, Chemical Abstracts *87* (1977), 69 109 (JP-AI-75/116 951) und Derwent Abstracts 40 783Y/23 (JP-B1-78/18 236). Nachteilig bei diesen bekannten Pfropfcopolymerisaten sind die schlechten Kopplungsausbeuten und die gegebenenfalls leichte Rückspaltbarkeit der erhaltenen Produkte.

Aufgabe der vorliegenden Erfindung war es, Pfropfpolymere von Polyphenylenethern mit Styrolpolymerisaten aufzufinden, welche die oben erwähnten Nachteile nicht aufweisen, sich durch gute mechanische Eigenschaften, Chemikalien- und Lösungsmittelresistenz auszeichnen und, gegebenenfalls in Mischung mit anderen Polymeren zur thermoplastischen Verarbeitung zu Formkörpern geeignet sind.

Diese Aufgaben wurden durch Pfropfpolymerisate gemäß Ansprüchen 1 bis 4 und durch ein Verfahren zur Herstellung derartiger Pfropfpolymerisate nach Ansprüchen 5 bis 6 gelöst.

Die erfindungsgemäßen Pfropfpolymeren weisen Durchschnittsmolekulargewichte (Gewichtsmittel $M_w$) von 5 000 bis 2 000 000, bevorzugt von 20 000 bis 200 000 auf, wobei das Molekulargewicht jeweils gemessen wurde durch Gelpermeations-Chromatographie in 0,25 gewichtsprozentiger Tetrahydrofuranlösung bei 23 °C und einer Durchflußgeschwindigkeit von 1,2 ml/min (vgl. G. Glöckner, « Polymercharakterisierung durch Flüssigkeits-Chromatographie », Verlag A. Hüttig, Heidelberg, 1982).

Die in den polymeren Einheiten der Hauptkette :

$$-(A)_n-\underset{\underset{|}{\overset{|}{O}}}{(B)_m}-(C)_p-$$

gegebenenfalls enthaltende Einheit A besteht aus einer einpolymerisierten vinylaromatischen Monomereinheit, insbesondere der allgemeinen Formel

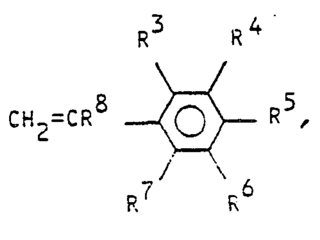

wobei $R^3$ bis $R^7$ = H, $C_1$- bis $C_8$-Alkyl, Halogen, CN, $NO_2$ oder COOH und $R^8$ = H oder $C_1$- bis $C_8$-Alkyl ist. Es sind aber auch andere substituierte vinylaromatische Monomere geeignet. Bevorzugt sind Monomere der obigen Formel, in denen $R^3$ bis $R^8$ = H oder Methyl, insbesondere H. Die Monomeren der Einheit A enthalten keine Hydroxylgruppen. Die Einheit A ist in der polymeren Einheit der Hauptkette bevorzugt in Mengen von 0 bis 99, besonders bevorzugt von 50 bis 95 Gew.% enthalten. Der Gehalt an Monomoreneinheit A im Polymeren der Hauptkette ist gegebenenfalls nur dann null, wenn die Einheit B sich von einem

Hydroxylgruppen enthaltenden vinylaromatischen Monomer ableitet. Im allgemeinen ist die Zahl n = 0,1 oder größer als 1.

Die in den polymeren Einheiten der Hauptkette enthaltende Einheit B besteht aus einer eine Etherseitengruppe tragenden einpolymerisierten organischen Einheit. Diese Einheit leitet sich aus einem einpolymerisierten Hydroxylgruppen enthaltenden Monomer ab, das monoolefinisch ungesättigt ist. Diese Monomereinheit hat bevorzugt die Formel :

$$CH_2{=}CR^9{-}D{-}(OH)q,$$

wobei q = eine ganze Zahl größer als Null, $R^9$ = H oder $C_1$- bis $C_8$-Alkyl und D =

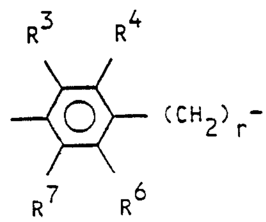

worin $R^3$ bis $R^7$ die bei A angegebene Bedeutung haben und r = 0, 1 oder 2 ist oder

D = 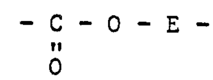

oder

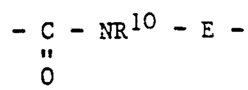

ist, wobei E = ein $C_1$- bis $C_8$-Alkyliden oder Cyclohexyliden und $R^{10}$ = H oder $C_1$- bis $C_8$-Alkyl bedeutet oder

D = 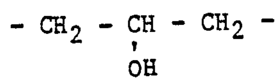

oder

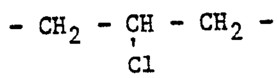

ist oder Gemische der obigen Monomeren. Die Einheit B ist in der polymeren Einheit der Hauptkette bevorzugt in Mengen von 0,1 bis 70, besonders bevorzugt in Mengen von 0,5 bis 20 Gew.% enthalten. Im allgemeinen ist die Zahl m = 1, 2, 3 oder größer als 3.

Bei der in den polymeren Einheiten der Hauptkette gegebenenfalls vorhandenen Einheit C handelt es sich um einpolymerisierte mono- oder diolefinische ungesättigte Monomere, die keine Hydroxylgruppe enthalten und die mit den den Einheiten A und B zugrundeliegenden Monomeren copolymerisierbar sind. Diese Einheit ist im Polymeren der Hauptkette bevorzugt in Mengen von 0 bis 45 Gew.% enthalten, wobei sich die Prozentzahlen von A, B und gegebenenfalls C in der polymeren Einheit der Hauptkette stets zu 100 addieren. Die Einheit C soll sich aus anderen organischen Monomeren ableiten als die Einheit A und B. Im allgemeinen ist die Zahl p = 0, 1, 2 oder 3 größer als 3.

Die Einheiten A, B und C können statistisch, d. h. beliebig über die Hauptkette verteilt, alternierend und/oder blockartig im Polymeren der Hauptkette verteilt sein. Derartige Anordnungen von Monomereinheiten in Copolymeren sind an sich bekannt, so daß sich eine weitere Erläuterung erübrigt.

Das Polymere der Hauptkette ist über Etherbrücken an den Rest X eines bifunktionellen Kopplungsmittels gebunden, das sich von einem bifunktionellen organischen oder anorganischen Säurederivat oder von Alkylchlorsilanen ableitet. Insbesondere besteht der Rest X des Kopplungsmittels aus :

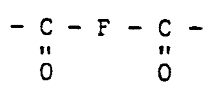

oder

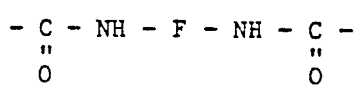

wobei F = ein aliphatischer, olefinischer oder aromatischer Kohlenwasserstoffrest, oder aus :

$$-\underset{\overset{\|}{O}}{C}- \quad , \quad -\underset{\overset{\|}{O}}{C}-\underset{\overset{\|}{O}}{C}- \quad , \quad -SO_2- \qquad -POG-$$

$$-\overset{G}{\overset{|}{P}}- \quad , \quad -\overset{G}{\overset{|}{B}}- \quad , \quad -\underset{\underset{G}{|}}{\overset{G}{\overset{|}{Si}}}\{O-\underset{\underset{G}{|}}{\overset{G}{\overset{|}{Si}}}\}_s \quad ,$$

wobei G = Alkyl, Aryl, Aralkyl, Alkoxy, Aryloxy, Aralkoxy oder Halogen und s = eine ganze Zahl 0, 1, 2, 3 oder größer als 3 ist.

Beispielhaft für bevorzugte Kopplungsmittel seien genannt : Adipinsäuredichlorid, Terephthalsäuredichlorid, Trimesoyldichlorid, Trimellitsäuredichlorid, Oxalsäuredichlorid, Pimelinsäuredichlorid, Glutarsäuredichlorid, Benzophenontetracarbonsäurechlorid, Oxydiacetyldichlorid, Oxybenzoyldichlorid, Sebacindisäurechlorid und Azealinsäuredichlorid, außerdem Phosgen. Andere bevorzugte Kopplungsmittel sind Phosphor oder Schwefel enthaltende Säurehalogenide wie Sulforyldichlorid, Phosphoroxytrichlorid, Alkyl-, Aryl- und Arylalkylphosphordichloride, Alkyl-, Aryl- und Arylalkylphosphordichloride. Besonders geeignet sind auch Silicium und Bor enthaltende Säurechloride, beispielhaft seien genannt Dialkyl-, -aryl- und -alkylaryldichlorsilane, Dialkoxy-, -aryloxy- oder -arylalkyloxydichlorsilane, Methyltrichlorsilan, Ethyltrichlorsilan, Amyltrichlorsilan, Vinyltrichlorsilan. Die Kopplungsmittel können auch in Gemisch eingesetzt werden.

An das Kopplungsmittel ist, über ein endständiges Sauerstoffatom, ein gegebenenfalls nichtsubstituierter Polyphenylenetherrest (PPE) gebunden. Dieser Polyphenylenetherrest der Seitenkette hat bevorzugt die allgemeine Formel II, wie im abhängigen Anspruch 3 angegeben, wobei a besonders bevorzugt eine ganze Zahl von 50 bos 200 ist. Das Pfropfpolymere (I) enthält bevorzugt 5 bis 85, insbesondere 20 bis 60 Gew.% des Polyphenylenethers (PPE) als Seitenkette.

Die Polyphenylenether (PPE) werden nach den bekannten Verfahren aus Phenolen durch oxidative Kupplung hergestellt, wie es z. B. beschrieben ist in den US-Patentschriften 3 306 879, 3 914 266, 3 956 442, 2 965 069, 3 972 851, 3 496 236, 3 367 978 und 4 140 675. Spezielle Beispiele für das PPE sind Poly-(2,6-dimethylphenylen-1,4-ether), Poly-(2,6-diethylphenylen-1,4-ether), Poly-(2,6-dipropylphenylen-1,4-ether), Poly-(2-methyl-6-allylphenylen-1,4-ether), Poly-(2,6-dimethoxyphenylen-1,4-ether), Poly-(2-methyl-6-chlorphenylen-1,4-ether), Poly-(2,6-dichlormethylphenylen-1,4-ether), Poly-(2-methyl-6-bromphenylen-1,4-ether), Poly-(2,5-dimethylphenylen-1,4-ether), Poly-(2,6-diphenylphenylen-1,4-ether) oder Copolymere von diesen.

Besonders bevorzugt sind Pfropfcopolymeren der Formel (I), die Als a Styrol, als B Hydroxy-n-butyl- oder Hydroxyethylacrylat, als C gegebenenfalls Butylacrylat oder Acrylnitril, als X den Rest des Kopplungsmittels Terephthaloyldichlorid, Phosgen, Isophthaloyldichlorid, Oxallyldichlorid, Dimethyldichlorsilan, Phosphoryldichlorid oder Methyltrichlorsilan einpolymerisiert enthalten und wobei PPE = Poly-(2,6-dimethyl-phenylen-1,4-ether).

Im einzelnen sind als Styrolcopolymerisate der Hauptkette besonders solche geeignet, wie sie in der Publikation « Styrene, its Polymers, Copolymers and Derivatives », Book Division Reinhold Publishing Corp., New York, 1952, von R. H. Boundy und in « Partical Polymerisation of Polystyrene », Cahners Book, Boston, 1871, von R. B. Bishop beschrieben sind und der erfindungsgemäßen Zusammensetzung entsprechen. Außerdem sind die in den US-Patentschriften 3 093 622, 3 069 399, 3 038 890 und 4 360 641 beschriebenen Polymeren aus vinylaromatischen Monomeren geeignet. Vorzugsweise werden als Styrolmonomere A eingesetzt : Styrol, Methylstyrole, 2,4-Dimethylstyrol, Fluor-, Chlor-, Dichlor-, Brom-, Dibrom-, p-Phenyl- oder p-Ethylstyrol oder deren Gemische. Die Durchschnittsmolekulargewichte (Gewichtsmittel $M_w$), bestimmt durch Gelpermeations-Chromatographie, liegen zwischen 500 und 1,5 Millionen, vorzugsweise zwischen 30 000 und 100 000.

Als Comonomere (B) werden insbesondere solche mit mindestens einer funktionalen Hydroxygruppe eingesetzt. Geeignet sind z. B. Hydroxystyrol, Vinylbenzylalkohol, Vinylbenzolalkohol, z. B. 1-Vinylbenzolethanol-2, oder (Meth)acrylsäureester oder -amide, die Hydroxygruppen tragen, wie Hydroxyethyl(meth)acrylat, Hydroxypropyl(meth)acrylat, Hydroxybutyl(meth)acrylat, Hydroxyhexyl(meth)acrylat, Hydroxycyclohexyl(meth)acrylat, Dihydroxypropyl(meth)acrylat oder die entsprechenden (Meth)-acrylamiden oder Gemische der Monomeren oder ferner Allylalkohol.

Als weitere Comonomere (C) werden gegebenenfalls vorzugsweise (Meth)acrylnitril, (Meth)acrylsäureester aus Alkanolen, (Meth)acrylamide, (Meth)acrylsäure, Maleinsäureanhydrid und Diene, wie Butadien und Isopren oder Gemische eingesetzt.

Zur Herstellung der erfindungsgemäßen Pfropfpolymeren (I) werden die Polymeren der allgemeinen Formel (III) mit Polyphenylenethern (PPE) umgesetzt. Dies geschieht in an sich bekannter Weise durch in der organischen Chemie üblichen Kopplungsreaktionen für OH-Gruppen, wobei das PPE erst mit

bekannten Kopplungsmitteln und anschließend mit dem Polymeren (III) umgesetzt wird. Die Kopplungsmittel reagieren mit der phenolischen Endgruppe und/oder gegebenenfalls mit —$CH_2$OH-Gruppen, die bei der Herstellung des PPE aus Methylgruppen am aromatischen Ring in untergeordneten Mengen entstehen können, am aromatischen Ring des PPE zu Z—X—PPE und haben danach noch eine weitere funktionale Gruppe Z, die bevorzugt Chlor ist, um mit dem Polymeren (III) zu reagieren. Die Kopplungsreaktion kann bevorzugt im alkalischen Medium in Lösung, Suspension, Schmelze oder Mehrphasenreaktion, z. B. Zweiphasenreaktion bevorzugt mit alkalischen Medium durchgeführt werden. Als Kopplungsmittel eignen sich solche, die sich mit der phenolischen Endgruppe des PPE und mit der Hydroxylgruppe des Polymeren (III) umsetzen.

Die Kopplungsmittel werden zuerst mit dem PPE umgesetzt, wobei sie bevorzugt mit der teminalen —OH-Gruppe des PPE reagieren. Dazu werden bevorzugt alle —OH-Gruppen des PPE umgesetzt, um das PPE mit dem Kopplungsmittel zu funktionalisieren. Die Menge OH-Gruppen im PPE, welches im allgemeinen eine breite Molekulargewichtsverteilung hat, werden auf bekanntem Weg bestimmt, wie z. B. durch IR-Spektroskopie bei 3 460 $cm^{-1}$ oder durch Titration mit Butyllithium, wobei der Endpunkt durch Zusatz von monomeren Styrol und Bildung von Styrolanion bestimmt wird. Die Menge an Kopplungsmittel wird so bemessen, daß vorzugsweise alle —OH-Gruppen funktionalisiert werden.

Die obige Reaktion wird vorzugsweise in einem nichtreagierenden Lösungsmittel durchgeführt, wie Cyclohexan, Toluol, Tetrahydrofuran. Es ist auch möglich, in einer Zweiphasenreaktion zu arbeiten. Die entstehende Halogenwasserstoffsäure wird entfernt, entweder durch Austreiben oder durch Zusatz eines basischen Materials, vorzugsweise eines tertiären Amins. Diese Reaktion kann bevorzugt zwischen 0 und 150 °C durchgeführt werden. Die Reaktionstemperatur wird nach Basenstärke und Siedepunkt des Lösungsmittels eingestellt.

Das erhaltene, funktionalisierte PPE der Formel (IV) kann durch Aufarbeitung, wie Filtrieren und Entfernen des Lösungsmittels aufgearbeitet werden. Es wird mit den hydroxylgruppentragenden Polymeren (III) in Lösung, Suspension, Schmelze oder Mehrphasenreaktion, z. B. Zweiphasenreaktion, umgesetzt. Dabei wird vorzugsweise wie beim ersten Schritt umgesetzt, wobei das funktionalisierte PPE-Polymere dem hydroxygruppenhaltigen Styrolcopolymeren auf einmal oder bevorzugt in bis zu 2 Stunden zugegeben wird. Die entstehende Halogenwasserstoffsäure wird ausgetrieben oder durch eine basische Substanz gebunden, bekannt ist z. B. die Verwendung eines tertiären Amins. Es können aber auch andere, säurebindende Substanzen eingesetzt werden. Gegebenenfalls werden die erhaltenen Pfropfcopolymeren durch Abdampfen des Lösungsmittels oder durch Fällen in Methanol gewonnen.

Um Umlagerungen des PPE zu vermeiden, kann ein tertiäres Amin bei der Kopplungsreaktion zugesetzt werden. Die erhaltenen Produkte werden durch Umfällen charakterisiert, wie dies in der US-A-3 644 227 beschrieben ist.

Die erfindungsgemäßen Pfropfcopolymere können in der üblichen Weise modifiziert werden. Sie können daher z. B. Verstärkungs- und Füllstoffe, insbesondere Glasfasern, Flammschutzmittel, Stabilisatoren, Gleit- und Flammschutzmittel sowie Farbstoffe und Pigmente enthalten. Als Verstärkungsmittel können z. B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Es ist ein Vorteil der erfindungsgemäßen Pfropfpolymeren, daß sie mit anderen Polymeren mischbar sind. Ein weiterer Vorteil besteht darin, daß sich die Pfropfpolymeren und insbesondere deren Mischungen mit anderen Polymeren für die Verarbeitung durch Extrusion, Extrusionsblasen, Spritzgießen oder sonst üblichen Verarbeitungstechniken zu Folien oder Formkörpern, eignen.

## Beispiel 1

### A. Herstellung eines funktionalisierten Polyphenylenethers

100 g PPE (hergestellt gemäß US-A-3 914 266, mit einer Grenzviskosität von = 0,54 $cm^3/g$, gemessen bei 25 °C in Chloroform und mit einer Hydroxylgruppenkonzentration von 5,88 · $10^{-3}$ Mol/100 g) werden unter Stickstoff in 1,6 l Toluol gelöst. Das PPE wird durch Abdestillieren von 0,5 l Toluol getrocknet. Man kühlt auf 40 °C ab und versetzt unter starkem Rühren mit 1,25 g (6,17 · $10^{-3}$ Mol) Terephthalsäuredichlorid. Anschließend wird in 30 Minuten 1,24 g (1,234 · $10^{-2}$ Mol) Triethylamin in 30 ml Toluol zugetropft. Man läßt eine Stunde bei 85 °C reagieren und läßt eine Stunde unter Rückfluß nachreagieren. Es bildet sich ein feiner weißer Niederschlag. Man kühlt ab. Das Filtrat wird als Zulauf im nächsten Reaktionsschritt eingesetzt.

### B. Herstellung des Pfropfpolymeren

125 g eines Styrolcopolymerisats (bestehend aus 95 Mol.% Styrol und 5 Mol.% Hydroxybutylacrylat, hergestellt durch kontinuierliche radikalische Polymerisation, mit einem $M_w$ = 70 000) werden in 3,5 l Toluol unter Stickstoff gelöst. Man versetzt mit 150 ml Dimethylformamid. Durch Abdestillieren von 1,0 l Toluol wird das Polymere getrocknet. Man versetzt bei 60 °C mit 5 g Triethylamin. Zu dieser Lösung tropft man die Lösung der Reaktion A in 20 Minuten zu und erwärmt 1 Stunde auf 80 °C, anschließend kocht man eine Stunde unter Rückfluß. Man destilliert anschließend 1 l Toluol ab und fällt die 60° warme

Lösung in 15 l Methanol. Das erhaltene Pfropfpolymere wird abgesaugt und getrocknet.

Beispiel 2

A. Herstellung der funktionalisierten PPE

100 g PPE gemäß Beispiel 1 werden unter Stickstoff in 1,5 l Toluol gelöst. Das PPE wird unter Abdestillieren von 0,5 l Toluol getrocknet. Man kühlt auf 60 °C und gibt unter starkem Rühren eine Mischung aus 0,13 g ($8{,}8 \cdot 10^{-4}$ Mol) Methyltrichlorsilan und 0,76 g ($5{,}88 \cdot 10^{-3}$ Mol) Dimethyldichlorsilan, gelöst in 30 ml Toluol, auf einmal zu. Anschließend werden in 15 Minuten 1,24 g ($1{,}23 \cdot 10^{-2}$) Triethylamin zugegeben. Man rührt eine Stunde bei 70 °C nach. Das so erhaltene Gemisch wird im nächsten Reaktionsschritt eingesetzt.

B. Herstellung der Pfropfcopolymeren

150 g eines Styrolcopolymeren gemäß Beispiel 1 wird unter Stickstoff in 2,5 l Toluol gelöst. Man versetzt mit 200 ml Dimethylformamid. Durch Abdestillieren von 0,8 l Toluol wird das Polymere getrocknet. Man versetzt bei 60 °C mit 7 g ($6{,}97 \cdot 10^{-2}$ Mol) Triethylamin. Zu dieser Lösung tropft man die Lösung der Reaktion A in 20 Minuten bei 70 °C zu und erwärmt eine Stunde auf 80 °C, anschließend kocht man eine Stunde unter Rückfluß. Man versetzt mit 20 g Ethanol, kühlt ab und fällt das Gemisch in Methanol.

Beispiele 3 bis 12

Beispiele 3 bis 12 werden analog zu Beispiel 2 (A und B) durchgeführt. Im Unterschied dazu werden bei der Stufe A andere Kopplungsmittel eingesetzt, die in der Tabelle 1 aufgeführt werden.

Tabelle 1

| Beispiel | Kopplungsmittel | Basische Substanz |
|---|---|---|
| 3 | $6{,}17 \cdot 10^{-3}$ Mol Isophthaloyldichlorid | $1{,}23 \cdot 10^{-2}$ Mol Triethylamin |
| 4 | $6{,}46 \cdot 10^{-3}$ Mol Terephthaloyldichlorid | $1{,}29 \cdot 10^{-2}$ Mol Triethylamin |
| 5 | $7{,}06 \cdot 10^{-3}$ Mol Terephthaloyldichlorid | $1{,}35 \cdot 10^{-2}$ Mol Triethylamin |
| 6 | $6{,}17 \cdot 10^{-3}$ Mol Oxydibenzoyldichlorid | $1{,}23 \cdot 10^{-2}$ Mol Triethylamin |
| 7 | $6{,}17 \cdot 10^{-3}$ Mol Terephthaloyldichlorid | $1{,}23 \cdot 10^{-2}$ Mol Diethylamin |
| 8 | $7{,}06 \cdot 10^{-3}$ Mol Terephthaloyldichlorid | $1{,}0 \cdot 10^{-1}$ Mol wasserfreies $Na_2CO_3$ |
| 9 | $6{,}17 \cdot 10^{-4}$ Mol Dimethyldichlorsilan | $1{,}5 \cdot 10^{-2}$ Mol Triethylamin |
| 10 | $6{,}17 \cdot 10^{-3}$ Mol Oxalydichlorid | $3{,}0 \cdot 10^{-2}$ Mol Triethylamin |
| 11 | $5{,}17 \cdot 10^{-3}$ Mol Dimethyldichorsilan )<br>$1{,}00 \cdot 10^{-3}$ Mol Phosphoroxytrichlorid ) | $1{,}5 \cdot 10^{-2}$ Mol Tributylamin |
| 12 | $5{,}67 \cdot 10^{-3}$ Mol Dimethyldichlorsilan )<br>$0{,}50 \cdot 10^{-3}$ Mol Methyltrichlorsilan ) | $1{,}5 \cdot 10^{-2}$ Mol Triethylamin |

Beispiel 13

A. Herstellung des funktionalisierten PPE

100 g PPE gemäß Beispiel 1 (aber mit einer Grenzviskosität von = 0,61 $cm^3/g$, gemessen bei 25 °C in Chloroform, mit einer Hydroxylgruppenkonzentration von $4{,}84 \cdot 10^{-3}$ Mol/100 g) werden unter Stickstoff in 1,6 l Toluol gelöst. Das PPE wird durch Abdestillieren von 0,5 l Toluol getrocknet. Man kühlt auf 45 °C ab und versetzt unter starkem Rühren mit 1,3 g ($5{,}57 \cdot 10^{-3}$ Mol) Terephthalsäuredichlorid. Anschließend wird in 30 Minuten 1,13 g ($1{,}11 \cdot 10^{-2}$ Mol) Triethylamin in 30 ml Toluol zugetropft. Man läßt eine Stunde bei 85° reagieren und läßt eine Stunde unter Rückfluß nachreagieren. Man kühlt ab. Die Mischung wird als Zulauf im nächsten Reaktionsschritt eingesetzt.

B. Herstellung des Pfropfcopolymeren

170 g eines Styrolcopolymerisats, bestehend aus 75 Gew.% Styrol, 20 Gew.% Acrylnitril und 5 Gew.%

Hydroxybutylacrylat (hergestellt durch kontinuierliche radikalische Polymerisation, mit einem $M_w$ = 80 000) werden in 3 l Toluol und 300 ml Dimethylformamid unter Stickstoff gelöst. Man destilliert 1 l Toluol ab. Man versetzt bei 60 °C mit 5 g Triethylamin. Zu dieser Lösung tropft man die Lösung der Reaktion A in 20 Minuten zu und erwärmt eine Stunde auf 80 °C, anschließend kocht man eine Stunde unter Rückfluß. Man destilliert 1 l Toluol ab und fällt die 60 °C warme Lösung in 10 l Methanol. Das erhaltene Pfropfcopolymere wird abgesaugt und getrocknet.

Beispiel 14

Herstellung des Pfropfcopolymeren

140 g eines Styrolcopolymerisats, bestehend aus 70 Gew.% Styrol, 20 Gew.% n-Butylacrylat und 10 Gew.% Hydroxyethylacrylat mit einem $M_w$ = 95 000 werden in 3 l Xylol und 1 l Dimethylformamid gelöst. Man dampft 1 l Xylol ab. Man versetzt bei 55 °C mit 10 g Dimethylanilin. Zu dieser Lösung tropft man die Lösung der Reaktion A, Beispiel 13 in 20 Minuten zu und erwärmt eine Stunde auf 120 °C. Man kühlt auf 60 °C und gießt in 10 l Methanol.

Beispiel 15

Herstellung der Pfropfcopolymeren

100 g eines Styrolcopolymerisats, bestehend aus 71 Gew.% Styrol, 25 Gew.% Acrylnitril und 4 Gew.% Hydroxyethylacrylat mit einem $M_w$ von 90 000 werden in 3 l Toluol und 0,5 l Dimethylformamid gelöst. Man dampft 1 l Toluol ab. Zu dieser Lösung tropft man die Lösung der Reaktion A, Beispiel 12 in 30 Minuten bei 80 °C zu und erwärmt eine Stunde auf 100 °C. Man fällt in Methanol.

Die Polymeren der Beispiele 1 bis 15 werden durch Umfällen aus Methylendichlorid gemäß US-Patent 3 644 227 charakterisiert. Dabei bildet das nicht an das Styrolcopolymere gebundene PPE mit $CH_2Cl_2$ einen unlöslichen Komplex. Die ausgefallene Menge an PPE ist in Tabelle 1, Spalte 3 angegeben. Spalte 4 gibt die Vicat-Temperatur VST/B gemessen nach DIN 53 460 an.

| Beispiel | Gew.% PPE im Polymeren | Gew.% PPE aus $CH_2Cl_2$-Fällung | Vicat-Temp. °C |
|---|---|---|---|
| 1 | 44 | 10,2 | 150 |
| 2 | 40 | 3,5 | 149 |
| 3 | 40 | 5,6 | 147 |
| 4 | 40 | 4,2 | 147 |
| 5 | 40 | 2,5 | 149 |
| 6 | 40 | 7,4 | 145 |
| 7 | 40 | 3,0 | 147 |
| 8 | 40 | 16,4 | 142 |
| 9 | 40 | 4,6 | 144 |
| 10 | 40 | 10,0 | 143 |
| 11 | 40 | 3,0 | 147 |
| 12 | 40 | 4,3 | 145 |
| 13 | 37 | 7,3 | 149 |
| 14 | 42 | 4,8 | 115 |
| 15 | 50 | 12,0 | 153 |

**Patentansprüche**

1. Pfropfpolymerisate mit einem Gewichtsmittel des Molekulargewichtes zwischen 5 000 und 2 000 000, die aus Struktureinheiten der allgemeinen Formel (I):

$$-(A)_n-(\underset{\substack{| \\ O \\ | \\ X-PPE}}{B})_m-(C)_p- \qquad (I)$$

bestehen und sich aus den polymeren Einheiten der Hauptkette :

$$-(A)_n-\underset{\substack{|\\O\\|}}{(B)_m}-(C)_p-$$

und Einheiten eines gepfropften Polymeren der Seitenkette —X—PPE zusammensetzen, worin A = eine einpolymerisierte vinylaromatische Einheit, B = eine Etherseitengruppe tragende einpolymerisierte organische Einheit, die sich von einem OH-Gruppen tragenden monoolefinisch ungesättigten Monomeren ableitet, und C = eine einpolymerisierte Einheit aus einem mono- oder diolefinisch ungesättigten, keine OH-Gruppe enthaltenden Monomeren, das mit den A und B zugrundeliegenden Monomeren copolymerisierbar ist, wobei die Einheiten A, B und C statistisch, alternierend und/oder blockartig in den polymeren Einheiten der Hauptkette verteilt sind, und wobei m und n = eine ganze Zahl 1, 2 oder 3 oder größer als 3, n zusätzlich 0 sein kann, wenn B sich von einem OH-Gruppen enthaltenden vinylaromatischen Monomeren ableitet, p eine ganze Zahl 0, 1, 2, 3 oder größer als 3 und wobei X = der Rest eines bifunktionellen Kopplungsmittels, das sich von einem bifunktionellen organischen oder anorganischen Säurederivat oder von Alkylchlorsilanen ableitet, und PPE = eine über ein endständiges Sauerstoffatom gebundener, gegebenenfalls nichtsubstituierter Polyphenylenetherrest sind.

2. Pfropfpolymerisate nach Anspruch 1, dadurch gekennzeichnet, daß sich die Einheit A aus einpolymerisiertem, gegebenenfalls substituiertem Styrol, das keine Hydroxylgruppe enthält, ableibet.

3. Pfropfpolymerisate nach Anspruch 1, dadurch gekennzeichnet, daß der Polyphenylenetherrest der Seitenkette die allgemeine Formel (II)

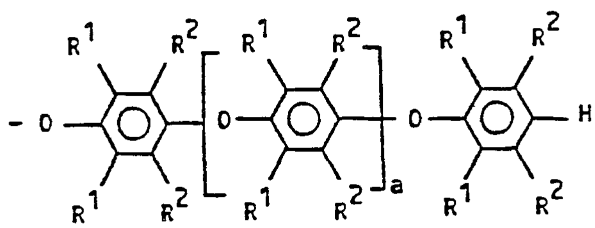

(II)

hat, wobei a = eine ganze Zahl größer als 10 und $R^1$ und $R^1$ = Wasserstoff, Kohlenwasserstoffrest, Halogen oder Halogenkohlenwasserstoffrest sind.

4. Pfropfpolymerisate nach Anspruch 1, dadurch gekennzeichnet, daß A einpolymerisiertes Styrol, B einpolymerisiertes Hydroxy-n-butyl- oder Hydroxyethylacrylat, C gegebenenfalls einpolymerisiertes Butylacrylat oder Acrylnitril, X = der Rest des Kopplungsmittels Terephthaloyldichlorid, Isophthaloyldichlorid, Oxyalkyldichlorid, Dimethyldichlorsilan, Phosphoryltrichlorid, Methyltrichlorsilan oder Phosgen und PPE = Poly-(2,6-dimethylphenylen-1,4-ether).

5. Verfahren zur Herstellung der Pfropfpolymeren nach Ansprüchen 1 bis 4, dadurch gekennzeichnet, daß ein Hydroxylgruppen enthaltendes Stammpolymerisat der allgemeinen Formel (III).

$$-(A)_n-\underset{\substack{|\\OH}}{(B)_m}-(C)_p- \qquad (III)$$

mit substituierten Polyphenylenetherpolymeren der allgemeinen Formel (IV)

$$Z—X—PPE \qquad (IV),$$

wobei Z eine mit der Hydroxylgruppe des Stammpolymeren (III) reagierende Gruppe ist, zu den Pfropfpolymeren der allgemeinen Formel (I), wobei die Reste A, B, C, X und PPE und die Buchstaben n, m und p die dort angegebene Bedeutung haben, umgesetzt wird.

6. Verfahren nach Anspruch 5, dadurch gekennzeichnet, daß Z = Chlor und die Umsetzung im alkalischen Medium erfolgt.

7. Verwendung der Pfropfpolymeren nach Ansprüchen 1 bis 6 zur Herstellung von Mischungen mit anderen Polymeren.

8. Verwendung der Pfropfpolymeren nach Ansprüchen 1 bis 6 gegebenenfalls in Mischung mit anderen Polymeren zur thermoplastischen Verarbeitung von Formkörpern.

**Claims**

1. A graft polymer having a weight average molecular weight of from 5 000 to 2 000 000, which

consists of structural units of the general formula (I)

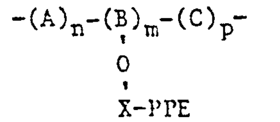

(I)

and whose main chain is composed of polymer units

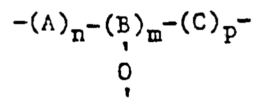

and whose side chain —X—PPE is composed of units of a grafted polymer, in which formulae A is a polymerized vinyl-aromatic unit ; B is a polymerized organic unit bearing an ether side group and derived from a monoolefinically unsaturated monomer containing OH groups ; C is a polymerized unit of a mono- or diolefinically unsaturated monomer which does not contain an OH group and is copolymerizable with the monomers on which A and B are based, units A, B and C being distributed randomly, alternately and/or as blocks in the main chain ; m and n are each an integer from 1 to 3 or larger than 3, it being possible for n to also be 0 if B is derived from a vinyl-aromatic monomer containing OH groups ; p is an integer from 0 to 3 or larger than 3 ; X is the radical of a bifunctional coupling agent which is derived from a bifunctional organic or inorganic acid derivative or from an alkyl chlorosilane ; and PPE is a substituted or unsubstituted polyphenylene ether radical attached via a terminal oxygen atom.

2. A graft polymer as claimed in claim 1, wherein unit A is derived from polymerized, substituted or unsubstituted styrene which does not contain an OH group.

3. A graft polymer as claimed in claim 1, wherein the polyphenylene ether radical of the side chain is of the general formula (II)

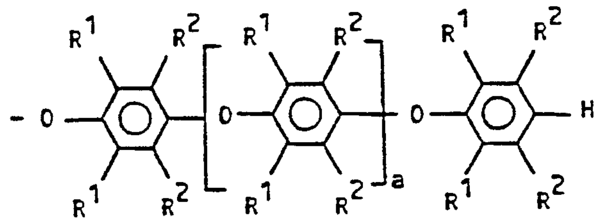

(II)

where a is an integer larger than 10, and $R^1$ and $R^2$ are each hydrogen, a hydrocarbon radical, halogen or a halohydrocarbon radical.

4. A graft polymer as claimed in claim 1, wherein A is polymerized styrene, B is polymerized hydroxy-n-butyl acrylate or hydroxyethyl acrylate, C is polymerized butyl acrylate or acrylonitrile, X is the radical of the coupling agent terephthaloyl dichloride, isophthaloyl dichloride, oxyalkyl dichloride, dimethyl dichlorosilane, phosphoryl trichloride, methyl trichlorosilane or phosgene, and PPE is poly-(2,6-dimethylphenylene-1,4-ether).

5. A process for the preparation of a graft polymer as claimed in claims 1 to 4, wherein a hydroxyl-containing base polymer of the general formula (III)

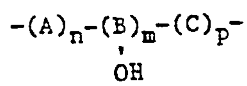

(III)

is reacted with a substituted polyphenylene ether polymer of the general formula (IV)

Z—X—PPE (IV),

where Z is a group which reacts with the hydroxyl group of the base polymer (III) to give the graft polymer of the general formula (I), the radicals A, B, C, X and PPE and the letters n, m and p having the above-specified meanings.

6. A process as claimed in claim 5, wherein Z is chlorine and the reaction is carried out in alkaline medium.

7. The use of a graft polymer as claimed in claims 1 to 6 for the production of mixtures with other polymers.

8. The use of a graft polymer as claimed in claims 1 to 6 optionally in admixture with other polymers for the production of mouldings.

**Revendications**

1. Copolymères greffés ayant un poids moléculaire moyen en poids compris entre 5 000 et 2 000 000, qui sont formés d'unités structurales de formule générale (I)

$$-(A)_n-(B)_m-(C)_p- \quad (I)$$
O
X-PPE

et se composent des unités polymères de la chaîne principale :

$$-(A)_n-(B)_m-(C)_p-$$
O

et d'unités d'un polymère greffé de la chaîne latérale —X—PPE, formules dans lesquelles A est une unité vinylaromatique en liaison polymère, B est une unité organique en liaison polymère portant un groupe latéral éther, qui dérive d'un monomère insaturé mono-oléfiniquement portant des groupes OH, et C est une unité en liaison polymère formée d'un monomère insaturé mono- ou dioléfiniquement qui ne contient pas de groupe OH et qui est copolymérisable avec les monomères à la base de A et B, les unités A, B et C étant réparties statistiquement, en alternance et/ou par blocs dans les unités polymères de la chaîne principale, m et n sont chacun un nombre entier 1, 2 ou 3 ou supérieur à 3, n pouvant être en plus égal à 0 lorsque B dérive d'un monomère vinylaromatique contenant des groupes OH, p est un nombre entier 0, 1, 2, 3 ou supérieur à 3, X est le radical d'un agent de copulation bifonctionnel qui dérive d'un dérivé d'acide organique ou inorganique bifonctionnel et PPE est un radical éther de polyphénylène éventuellement non substitué, fixé par un atome d'oxygène terminal.

2. Copolymère greffé selon la revendication 1, caractérisé en ce que l'unité A dérive d'un styrène éventuellement substitué, en liaison polymere, qui ne contient pas de groupe hydroxyle.

3. Copolymères greffés selon la revendication 1, caractérisés en ce que le radical éther de polyphénylène de la chaîne latérale répond à la formule générale (II).

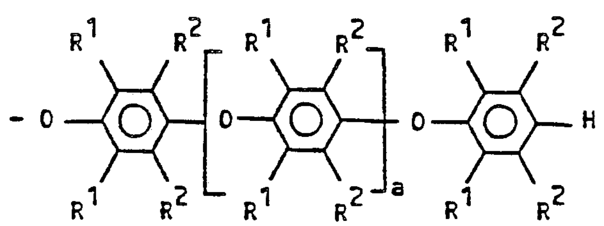

(II)

dans laquelle a est un nombre entier supérieur à 10 et $R^1$, $R^2$ représentent des atomes d'hydrogène, d'halogènes, des radicaux hydrocarbure ou hydrocarbure halogéné.

4. Copolymères greffés selon la revendication 1, caractérisés en ce que A est un styrène en liaison polymère, B est un acrylate d'hydroxy-n-butyle ou d'hydroxyéthyle en liaison polymère, C est un acrylate de butyle ou un acrylonitrile éventuellement en liaison polymère, X est le radical de l'agent de copulation dichlorure de téréphtaloyle, dichlorure d'isophtaloyle, dichlorure d'oxyalkyle, diméthyldichlorosilane, trichlorure de phosphoryle, méthyltrichlorosilane ou phosgène et PPE est un poly-(2,6-diméthylphénylène-1,4-éther).

5. Procédé de préparation des copolymères greffés selon l'une quelconque des revendications 1 à 4, caractérisé en ce qu'un polymère de base contenant des groupes hydroxyle, de formule générale (III)

$$-(A)_n-(B)_m-(C)_p- \quad (III)$$
OH

est mis en réaction avec des polymères d'éther de polyphénylène substitué de formule générale (IV)

$$Z—X—PPE \quad (IV)$$

dans laquelle Z est un groupe réagissant avec le groupe hydroxyle du polymère de base (III), pour obtenir le copolymère greffé de formule générale (I), les radicaux A, B, C, X, PPE et les lettres n, m et p ayant les significations données dans ces revendications.

6. Procédé selon la revendication 5, caractérisé en ce que Z est un atome de chlore et la réaction s'effectue en milieu alcalin.

7. Utilisation des copolymères greffés selon l'une quelconque des revendications 1 à 6 pour la préparation de mélanges avec d'autres polymères.

8. Utilisation des copolymères greffés selon l'une quelconque des revendications 1 à 6, éventuellement en mélange avec d'autres polymères, pour la fabrication de pièces moulées par transformation thermoplastique.